# EUROPÄISCHE PATENTSCHRIFT

(11) **EP 1 967 272 B1**
(45) Veröffentlichungstag und Bekanntmachung des Hinweises auf die Patenterteilung: **15.09.2010**
(21) Anmeldenummer: 07004729.5
(22) Anmeldetag: 08.03.2007
(51) Int. Cl.: B02C 18/22, A01G 3/00

(54) **Häcksler**
Shredder
Broyeur

(43) Veröffentlichungstag der Anmeldung: 10.09.2008
(73) Patentinhaber: Viking GmbH, 6336 Langkampfen (AT)
(72) Erfinder: Duregger, Georg, A-6342 Niederndorf (AT)
(74) Vertreter: Wasmuth, Rolf

(56) Entgegenhaltungen:
- DE-C1- 3 528 507
- DE-U1- 8 220 351
- DE-U1- 8 224 914
- DE-U1- 8 810 996
- US-A- 3 907 216

## Beschreibung

Die Erfindung betrifft einen Häcksler der im Oberbegriff des Anspruchs 1 angegebenen Gattung.

Aus der DE 35 28 507 C1 ist ein Häcksler bekannt, in dessen Messerkammer ein oberes Zuführrohr für Häckselgut und ein seitliches Astzuführrohr für Schnitzelgut münden. In der Messerkammer ist eine Messerscheibe angeordnet, die eine weitgehende Teilung der Messerkammer in eine Häckselkammer und eine Schnitzelkammer bewirkt.

Zum Häckseln muß der Bediener Häckselgut wie Laub oder dgl. in das obere Zuführrohr zuführen. Es hat sich gezeigt, daß hierbei das seitliche Astzuführrohr hinderlich sein kann, da es die Zugänglichkeit des oberen Zuführrohrs einschränkt.

Der Erfindung liegt die Aufgabe zugrunde, einen Häcksler der gattungsgemäßen Art zu schaffen, der einen vielseitigen Einsatz erlaubt und der einen hohen Bedienkomfort bietet.

Diese Aufgabe wird durch einen Häcksler mit den Merkmalen des Anspruchs 1 gelöst.

Dadurch, daß der Häcksler sowohl eine Häckselkammer mit oberem Zuführrohr als auch eine Schnitzelkammer mit seitlichem Astzuführrohr aufweist, kann sowohl Häckselgut wie Laub als auch Schnitzelgut wie Äste oder dgl. gut und effektiv zerkleinert werden. Um im Häckselbetrieb eine gute Zugänglichkeit des oberen Zuführrohrs zu gewährleisten, ist das seitliche Astzuführrohr in eine Außerbetriebsposition schwenkbar. Die Außerbetriebsposition ist dabei zweckmäßig so gewählt, daß das Astzuführrohr die Zugänglichkeit des oberen Zuführrohrs in Außerbetriebsposition nicht oder nur unwesentlich einschränkt. Dadurch wird die Beschickung des Häckslers mit Häckselgut vereinfacht und so ein hoher Durchsatz des Häckslers ermöglicht.

Vorteilhaft ist das Astzuführrohr um eine in normaler Betriebslage des Häckslers etwa horizontal liegende Schwenkachse nach oben schwenkbar. Zweckmäßig ist das Astzuführrohr in Außerbetriebsposition benachbart zum oberen Zuführrohr angeordnet. Durch die Anordnung benachbart zum oberen Zuführrohr wird die Zugänglichkeit des oberen Zuführrohrs durch das Astzuführrohr nicht eingeschränkt. Insbesondere liegt die Längsmittelachse des Astzuführrohrs in Außerbetriebsposition des Astzuführrohrs etwa parallel zur Längsmittelachse des oberen Zuführrohrs.

Vorteilhaft sind Häckselkammer und Schnitzelkammer über eine gehäusefeste Trennwand voneinander getrennt. Dadurch, daß die Trennwand nicht mitrotiert, sondern fest am Gehäuse des Häckslers angeordnet ist, kann sich die Trennwand über die gesamte Länge und Breite der Messerkammer erstrecken. Dadurch wird eine vollständige Trennung der beiden Kammern erreicht. Ein seitlicher Übertritt von Häckselgut in die Schnitzelkammer an den Seiten einer Messerscheibe ist vermieden.

Es ist vorgesehen, daß das Astzuführrohr in Betriebsposition über eine Asteintrittsöffnung mit der Schnitzelkammer verbunden ist und daß die Trennwand im Bereich der Asteintrittsöffnung zur Häckselkammer hin gebogen ist. Der Begriff "gebogene Trennwand" bezieht sich dabei nicht auf das Herstellungsverfahren der Trennwand, sondern auf die Gestalt der Trennwand. Die Trennwand verläuft bezogen auf die Ebene der Trennwand im Bereich der Antriebswelle im Bereich der Asteintrittsöffnung zur Häckselkammer hin. Dadurch ist die Asteintrittsöffnung vergrößert. Dies ermöglicht einen vergleichsweise großen Auftreffwinkel der Äste auf eine in der Messerkammer angeordnete Messerscheibe und damit ein steiles Auftreffen der Äste auf die Messerscheibe. Dadurch ist ein gutes Schnitzelergebnis erzielbar. Gleichzeitig kann der Häcksler kompakt aufgebaut sein. Die Lagerungen der Messerscheiben in Häckselkammer und Schnitzelkammer können dadurch vergleichsweise nah beieinander angeordnet werden. Dies verringert die an der Antriebswelle wirkenden Kräfte.

Vorteilhaft führt aus der Schnitzelkammer eine Schnitzelaustrittsöffnung und aus der Häckselkammer eine Häckselaustrittsöffnung. Insbesondere münden beide Austrittsöffnungen in einen gemeinsamen Auswurf. Es ist vorgesehen, daß die Trennwand im Bereich der Austrittsöffnungen zur Schnitzelkammer hin gebogen ist. Die Austrittsöffnungen aus Häckselkammer und Schnitzelkammer sollen vorteilhaft etwa gleich groß sein. Um ein gutes Schnitzelergebnis durch steiles Zuführen der Äste zu erreichen und gleichzeitig eine kompakte Baugröße des Häckslers zu erzielen, ist die Trennwand in der Messerkammer vorteilhaft nicht mittig in der Messerkammer angeordnet, sondern zur Häckselkammer hin versetzt. Die Häckselkammer erstreckt sich in den unteren Bereich des oberen Zuführrohrs. Für eine ausreichend große Häckselaustrittsöffnung ist eine gebogene Form der Trennwand vorgesehen.

Vorteilhaft ist in der Schnitzelkammer eine Messerscheibe angeordnet, die mindestens ein Schneidmesser trägt. In der Häckselkammer ist insbesondere eine Messerscheibe angeordnet, die mindestens ein Reißmesser und vorteilhaft mindestens ein Flügelmesser trägt. Dadurch werden gute Ergebnisse beim Schnitzeln und beim Häckseln erreicht. In jeder Kammer sind die für Häckseln bzw. Schnitzeln vorteilhaften Messer angeordnet.

Es ist vorgesehen, daß die Messerscheibe in der Schnitzelkammer und die Messerscheibe in der Häckselkammer auf einer gemeinsamen Antriebswelle drehfest angeordnet sind, wobei die Antriebswelle von einem Antriebsmotor rotierend angetrieben ist. Der Antriebsmotor ist insbesondere ein Elektromotor. Als Antriebsmotor kann jedoch auch ein Verbrennungsmotor, beispielsweise ein Zweitaktmotor oder ein Viertaktmotor zum Einsatz kommen. Zweckmäßig liegt die Längsmittelachse des oberen Zuführrohrs etwa parallel zur Drehachse der Antriebswelle. Dadurch kann Häckselgut etwa senkrecht auf die in der Häckselkammer angeordnete Messerscheibe fallen. Dadurch wird ein gutes Häckselergebnis erreicht. Es ist vorgesehen, daß die Längsmittelachse des Astzuführrohrs in Betriebsposition mit der Drehachse der Antriebswelle einen Winkel einschließt, der kleiner als 90° ist und der insbesondere 20° bis 70°, vorzugsweise 30° bis 60° beträgt. Dieser vergleichsweise steile Winkel des Astzuführrohrs führt zu einem guten Schnitzelergebnis.

Ein Ausführungsbeispiel der Erfindung wird im folgenden anhand der Zeichnung erläutert. Es zeigen:
- Fig. 1: eine schematische Schnittdarstellung eines Häckslers,
- Fig. 2: eine perspektivische Darstellung einer Messerscheibe.

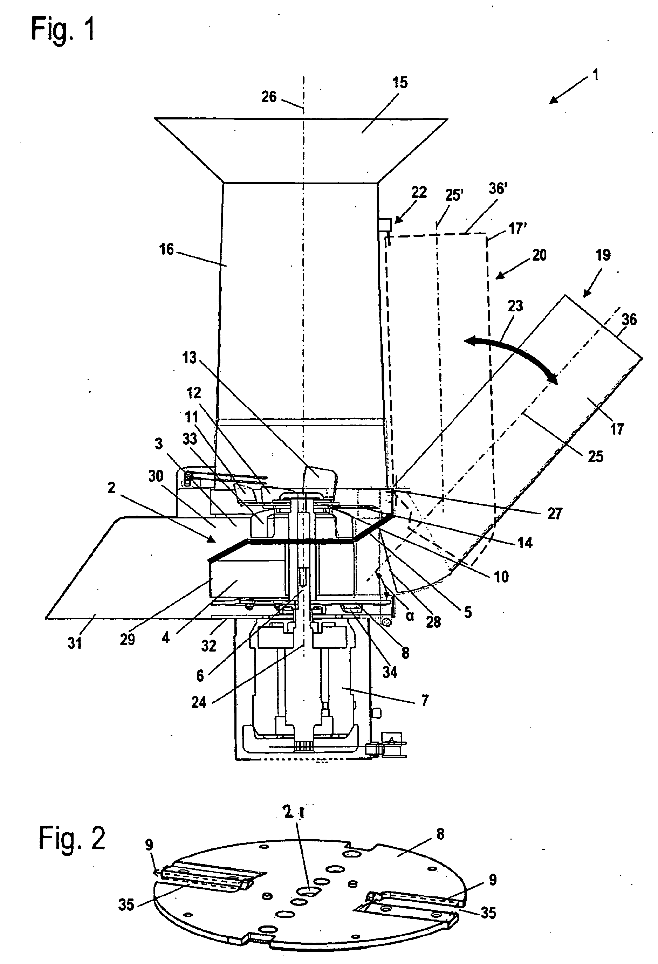

Der in Fig. 1 gezeigte Häcksler 1 ist vorzugsweise ein Gartenhäcksler. Der Häcksler 1 besitzt eine Messerkammer 2, die von einer Trennwand 5 in eine Häckselkammer 3 und eine in normaler Betriebsposition unterhalb der Häckselkammer 3 angeordnete Schnitzelkammer 4 geteilt ist. Die Trennwand 5 ist fest mit einem Gehäuse 32 des Häckslers 1 verbunden. Die Trennwand 5 erstreckt sich über die gesamte quer zur Zeichenebene in Fig. 1 liegende Breite der Messerkammer 2, so daß die Häckselkammer 3 und die Schnitzelkammer 4 im wesentlichen vollständig voneinander getrennt sind.

Der Häcksler 1 besitzt ein oberes Zuführrohr 16 für Häckselgut, das in die Häckselkammer 3 mündet. Am oberen Ende des oberen Zuführrohrs 16 ist ein oberer Einfülltrichter 15 angeordnet, der das Einfüllen von Häckselgut wie Laub oder dgl. erleichtert. In der Häckselkammer 3 ist eine Messerscheibe 10 angeordnet, auf der drei Reißmesser 11, 12, 13 angeordnet sind. An der Messerscheibe 10 ist außerdem ein Flügelmesser 14 angeordnet, das sich von der Messerscheibe 10 radial nach außen erstreckt. Es können auch mehrere Flügelmesser 14 vorgesehen sein. Auf der den Reißmessern 11, 12, 13 gegenüberliegenden Seite der Messerscheibe 10 sind an der Messerscheibe 10 Räumflügel 33 angeordnet, die gehäckseltes Gut zu einer Häckselaustrittsöffnung 30 fördern. Im Bereich der Häckselaustrittsöffnung 30 ist die Trennwand 5 zur Schnitzelkammer 4 hin gebogen. Dies erleichtert die Abfuhr von Häckselgut. Gleichzeitig wird die Häckselaustrittsöffnung 30 dadurch vergrößert.

Der Häcksler 1 besitzt ein seitliches Astzuführrohr 17, das mit einer Asteintrittsöffnung 28 in die Schnitzelkammer 4 mündet. Das Astzuführrohr 17 besitzt eine Einführöffnung 36, über die Äste oder dgl. in das Astzuführrohr 17 und von dort in die Schnitzelkammer 4 zugeführt werden können. In der Schnitzelkammer 4 ist eine Messerscheibe 8 zum Schnitzeln von Ästen oder dgl. angeordnet. Die Messerscheibe 8 besitzt auf ihrer der Häckselkammer 3 abgewandten Seite einen Räumflügel 34. Es können auch mehrere Räumflügel 34 vorgesehen sein. Die Räumflügel 34 fördern Schnitzelgut zu einer Schnitzelaustrittsöffnung 29. Die Schnitzelaustrittsöffnung 29 und die Häckselaustrittsöffnung 30 münden in einen gemeinsamen Auswurf 31, über den zerkleinertes Gut aus dem Häcksler 1 gelangt. Die Schnitzelaustrittsöffnung 29 und die Häckselaustrittsöffnung 30 sind vorteilhaft etwa gleich groß.

In Fig. 2 ist eine Messerscheibe 8 perspektivisch gezeigt. Die Messerscheibe 8 besitzt eine mittige Öffnung 21, die eine Abflachung aufweist. Mit der Öffnung 21 ist die Messerscheibe 8 auf einer Antriebswelle 6 (Fig. 1) drehfest festgelegt. An der Messerscheibe 8 sind zwei in Fig. 2 gestrichelt angedeutete Schneidmesser 9 über nicht gezeigte Schrauben fixiert. Die Schneidmesser 9 sind gegenüber der Ebene der Messerscheibe geringfügig um einige Grad geneigt. Vorlaufend zu den Schneidmessern 9 ist jeweils eine Öffnung 35 in der Messerscheibe vorgesehen, durch die Schnitzel in den Raum unterhalb der Messerscheibe 8 gelangen können und von dort mit den Räumflügeln 34 aus der Schnitzelkammer 4 gefördert werden.

Wie Fig. 1 zeigt ist die Antriebswelle 6 von einem Antriebsmotor 7 rotierend angetrieben, der unterhalb der Messerkammer 2 auf der dem oberen Zuführrohr 16 abgewandten Seite der Messerkammer 2 angeordnet ist. Der Antriebsmotor 7 ist insbesondere ein Elektromotor. Als Antriebsmotor kann jedoch auch ein Verbrennungsmotor wie beispielsweise ein Zweitaktmotor oder ein Viertaktmotor zum Einsatz kommen. Die Antriebswelle 6 treibt die Messerscheiben 8 und 10 um eine Drehachse 24 rotierend an. Die Drehachse 24 liegt parallel zu einer Längsmittelachse 26 des oberen Zuführrohrs 16. Insbesondere fallen die Längsmittelachse 26 und die Drehachse 24 zusammen, so daß Häckselgut, das über das obere Zuführrohr 16 eingefüllt wird, zentral und senkrecht auf die Messerscheibe 10 fällt.

Das Astzuführrohr 17 ist gegenüber der Drehachse 24 der Antriebswelle 6 geneigt. Die Längsmittelachse 25 des Astzuführrohrs 17 schließt mit der Ebene der Messerscheibe 10 einen Winkel α ein, der weniger als 90° beträgt. Der Winkel α beträgt vorteilhaft 20° bis 70° und insbesondere 30° bis 60°. Im Ausführungsbeispiel beträgt der Winkel α zwischen 40° und 50°. In der Position, in der die Längsmittelachse 25 des Astzuführrohrs 17 mit der Messerscheibe 8 den Winkel α einschließt, befindet sich das Zuführrohr 17 in einer Betriebsposition 19. Über das Astzuführrohr 17 können Äste in die Schnitzelkammer 4 zugeführt werden.

Das Astzuführrohr 17 ist am Gehäuse 32 des Häckslers 1 um eine Schwenkachse 27 schwenkbar gelagert und kann von der Betriebsposition 19 in eine Außerbetriebsposition 20 verstellt werden. Die Außerbetriebsposition 20 des Astzuführrohrs 17' ist in Fig. 1 mit einer gestrichelten Linie gezeigt. In Außerbetriebsposition 20 liegt die Längsmittelachse 25' des Astzuführrohrs 17' etwa parallel zur Längsmittelachse 26 des oberen Zuführrohrs 16. Das Astzuführrohr 17' liegt benachbart zum oberen Zuführrohr 16. In Außerbetriebsposition 20 des Astzuführrohrs 17' kann der Häcksler 1 im Häckselbetrieb betrieben werden. Der obere Einfülltrichter 15 ist für einen Bediener sehr gut zugänglich. Die Zugänglichkeit wird nicht vom Astzuführrohr 17 eingeschränkt. Um die Lage des Astzuführrohrs 17' in Außerbetriebsposition 20 zu sichern, ist eine Fixierung 22 vorgesehen. Die Fixierung 22 kann beispielsweise ein in die Einführöffnung 36' des Astzuführrohrs 17' ragender gefederter Hacken oder dgl. sein.

Um das Astzuführrohr 17' von der Außerbetriebsposition 20 in die Betriebsposition 19 zu überführen, wird die Fixierung 22 gelöst und das Astzuführrohr 17 in Richtung des Pfeils 23 um die Schwenkachse 27 nach außen und unten verschwenkt. Von der Betriebsposition 19 in die Außerbetriebsposition 20 wird das Astzuführrohr 17 um die annähernd horizontal liegende Schwenkachse 27 nach oben verschwenkt.

## Patentansprüche

1. Häcksler mit einer Messerkammer (2), die in eine Schnitzelkammer (4) und eine Häckselkammer (3) geteilt ist, mit einem oberen Zuführrohr (16) für Häckselgut und mit einem seitlichen Astzüführrohr (17), wobei das obere Zuführrohr (16) in die Häckselkammer (3) mündet und das Astzuführrohr (17) in die Schnitzelkammer (4), **dadurch gekennzeichnet, daß** das Astzuführrohr (17) für den Häckselbetrieb in eine Außerbetriebsposition (20) schwenkbar ist.

2. Häcksler nach Anspruch 1,
**dadurch gekennzeichnet, daß** das Astzuführrohr (17) um eine in normaler Betriebslage des Häckslers (1) etwa horizontal liegende Schwenkachse (27) nach oben schwenkbar ist und in Außerbetriebsposition (20) benachbart zum oberen Zuführrohr (16) angeordnet ist.

3. Häcksler nach Anspruch 1 oder 2,
**dadurch gekennzeichnet, daß** die Längsmittelachse (25) des Astzuführrohrs (17) in Außerbetriebsposition (20) des Astzuführrohrs (17) etwa parallel zur Längsmittelachse (26) des oberen Zuführrohrs (16) liegt.

4. Häcksler nach einem der Ansprüche 1 bis 3,
**dadurch gekennzeichnet, daß** die Häckselkammer (3) und die Schnitzelkammer (4) über eine gehäusefeste Trennwand (5) voneinander getrennt sind.

5. Häcksler nach Anspruch 4,
**dadurch gekennzeichnet, daß** das Astzuführrohr (17) in Betriebsposition (19) über eine Asteintrittsöffnung (28) mit der Schnitzelkammer (4) verbunden ist, und daß die Trennwand (5) im Bereich der Asteintrittsöffnung (28) zur Häckselkammer (3) hin gebogen ist.

6. Häcksler nach einem der Ansprüche 1 bis 5,
**dadurch gekennzeichnet, daß** aus der Schnitzelkammer (4) eine Schnitzelaustrittsöffnung (29) und aus der Häckselkammer (3) eine Häckselaustrittsöffnung (30) führt, wobei beide Austrittsöffnungen (29, 30) in einen gemeinsamen Auswurf (31) münden.

7. Häcksler nach Anspruch 6,
**dadurch gekennzeichnet, daß** die Trennwand (5) im Bereich der Austrittsöffnungen (29, 30) zur Schnitzelkammer (4) hin gebogen ist.

8. Häcksler nach einem der Ansprüche 1 bis 7,
**dadurch gekennzeichnet, daß** in der Schnitzelkammer (4) eine Messerscheibe (8) angeordnet ist, die mindestens ein Schneidmesser (9) trägt.

9. Häcksler nach einem der Ansprüche 1 bis 8,
**dadurch gekennzeichnet, daß** in der Häckselkammer (3) eine Messerscheibe (10) angeordnet ist, die mindestens ein Reißmesser (11, 12, 13) und insbesondere mindestens ein Flügelmesser (14) trägt.

10. Häcksler nach Anspruch 9,
**dadurch gekennzeichnet, daß** die Messerscheibe (8) in der Schnitzelkammer (4) und die Messerscheibe (10) in der Häckselkammer (3) auf einer gemeinsamen Antriebswelle (6) drehefest angeordnet sind, wobei die Antriebswelle (6) von einem Antriebsmotor (7) rotierend angetrieben ist.

11. Häcksler nach Anspruch 10,
**dadurch gekennzeichnet, daß** die Längsmittelachse (26) des oberen Zuführrohrs (16) etwa parallel zur Drehachse (24) der Antriebswelle (6) liegt.

12. Häcksler nach Anspruch 10 oder 11,
**dadurch gekennzeichnet, daß** die Längsmittelachse (25) des Astzuführrohrs (17) in Betriebsposition (19) mit der Drehachse (24) der Antriebswelle (6) einen Winkel (α) einschließt, der kleiner als 90° ist und der insbesondere 20° bis 70°, vorzugsweise 30° bis 60° beträgt.

## Claims

1. Shredder with a knife chamber (2) divided into a chipping chamber (4) and a shredding chamber (3) and with an upper feed tube (16) for material to be shredded and a lateral branch feed tube (17), the upper feed tube (16) terminating in the shredding chamber (3) and the branch feed tube (17) terminating in the chipping chamber (4),
**characterised in that** the branch feed tube (17) can be pivoted into an inoperative position (20) for shredding operation.

2. Shredder according to claim 1,
**characterised in that** the branch feed tube (17) can be pivoted upwards about a pivot axis (27) which is approximately horizontal in the normal operating position of the shredder (1) and is disposed adjacent to the upper feed tube (16) in the inoperative position (20).

3. Shredder according to claim 1 or 2,
**characterised in that** the longitudinal central axis (25) of the branch feed tube (17) is approximately parallel to the longitudinal central axis (26) of the upper feed tube (16) in the inoperative position (20) of the branch feed tube (17).

4. Shredder according to any of claims 1 to 3,
**characterised in that** the shredding chamber (3) and the chipping chamber (4) are separated from each other by a partition (5) of the housing.

5. Shredder according to claim 4,
**characterised in that** the branch feed tube (17) is connected to the chipping chamber (4) by a branch inlet (28) in the operative position (19), and **in that** the partition (5) is bent towards the chipping chamber (3) in the region of the branch inlet (28).

6. Shredder according to any of claims 1 to 5,
**characterised in that** a chip outlet (29) leads out of the chipping chamber (4) and a chaff outlet (30) leads out of the shredding chamber (3), the two outlets (29, 30) terminating in a common discharge (31).

7. Shredder according to claim 6,
**characterised in that** the partition (5) is bent towards the chipping chamber (4) in the region of the outlets (29, 30).

8. Shredder according to any of claims 1 to 7,
**characterised in that** a blade disc (8) supporting at least one cutting blade (9) is provided in the chipping chamber (4).

9. Shredder according to any of claims 1 to 8,
**characterised in that** a blade disc (10) supporting at least one shredding blade (11, 12, 13) and in particular at least one wing blade (14) is provided in the shredding chamber (3).

10. Shredder according to claim 9,
**characterised in that** the blade disc (8) in the chipping chamber (4) and the blade disc (10) in the shredding chamber (3) are non-rotatably mounted on a common drive shaft (6), the drive shaft (6) being driven in a rotary motion by a drive motor (7).

11. Shredder according to claim 10,
**characterised in that** the longitudinal central axis (26) of the upper feed tube (16) is approximately parallel to the axis of rotation (24) of the drive shaft (6).

12. Shredder according to claim 10 or 11,
**characterised in that** the longitudinal central axis (25) of the branch feed tube (17) encloses an angle (α) which is less than 90°, in particular 20° to 70° and preferably 30° to 60°, with the axis of rotation (24) of the drive shaft (6) in the operative position (19).

## Revendications

1. Broyeur avec une chambre de lames (2) qui est divisée en une chambre de coupe (4) et une chambre de broyage (3), avec un tube d'alimentation supérieur (16) pour les produits à broyer, et avec un tube d'alimentation latéral pour branches (17), le tube d'alimentation supérieur (16) débouchant dans la chambre de broyage (3) et le tube d'alimentation pour branches (17) dans la chambre de coupe (4), **caractérisé en ce que** le tube d'alimentation pour branches (17), pour le mode de broyage, est apte à pivoter jusqu'à une position de repos (20).

2. Broyeur selon la revendication 1,
**caractérisé en ce que** le tube d'alimentation pour branches (17) est apte à pivoter vers le haut sur un axe de pivotement (27) à peu près horizontal dans la position de fonctionnement normale du broyeur (1), et est disposé près du tube d'alimentation supérieur (16), dans la position de repos (20).

3. Broyeur selon la revendication 1 ou 2,
**caractérisé en ce que** l'axe longitudinal médian (25) du tube d'alimentation pour branches (17), dans sa position de repos (20), est à peu près parallèle à l'axe longitudinal médian (26) du tube d'alimentation supérieur (16).

4. Broyeur selon l'une des revendications 1 à 3,
**caractérisé en ce que** la chambre de broyage (3) et la chambre de coupe (4) sont séparées par une cloison (5) solidaire du carter.

5. Broyeur selon la revendication 4,
**caractérisé en ce que** le tube d'alimentation pour branches (17), dans sa position de fonctionnement (19), est relié à la chambre de coupe (4) par une ouverture d'entrée de branches (28) et **en ce que** la cloison (5) est courbée en direction de la chambre de broyage (3), dans la zone de l'ouverture d'entrée de branches (28).

6. Broyeur selon l'une des revendications 1 à 5,
**caractérisé en ce qu'**une ouverture de sortie de copeaux (29) part de la chambre de coupe (4), et une ouverture de sortie de broyat (30) part de la chambre de broyage (3), les deux ouvertures de sortie (29, 30) débouchant dans un éjecteur (31).

7. Broyeur selon la revendication 6,
**caractérisé en ce que** la cloison (5) est courbée en direction de la chambre de coupe (4), dans la zone des ouvertures de sortie (29, 30).

8. Broyeur selon l'une des revendications 1 à 7,
**caractérisé en ce qu'**un disque porte-lames (8) qui porte au moins une lame de coupe (9) est disposé dans la chambre de coupe (4).

9. Broyeur selon l'une des revendications 1 à 8,
**caractérisé en ce qu'**un disque porte-lames (10) qui porte au moins une lame de déchiquetage (11, 12, 13) et en particulier au moins une lame à ailettes (14) est disposé dans la chambre de broyage (3).

10. Broyeur selon la revendication 9,
**caractérisé en ce que** le disque porte-lames (8) prévu dans la chambre de coupe (4) et le disque porte-lames (10) prévu dans la chambre de broyage (3) sont disposés, solidaires en rotation, sur un arbre d'entraînement commun (6), l'arbre d'entraînement (6) étant entraîné en rotation par un moteur d'entraînement (7).

11. Broyeur selon la revendication 10,
**caractérisé en ce que** l'axe longitudinal médian (26) du tube d'alimentation supérieur (16) est à peu près parallèle à l'axe de rotation (24) de l'arbre d'entraînement (6).

12. Broyeur selon la revendication 10 ou 11,
**caractérisé en ce que** l'axe longitudinal médian (25) du tube d'alimentation pour branches (17), dans la position de fonctionnement (19), définit avec l'axe de rotation (24) de l'arbre d'entraînement (6) un angle (α) qui est inférieur à 90° et qui est en particulier de 20° à 70°, de préférence de 30° à 60°.
